Europäisches Patentamt

European Patent Office

Office européen des brevets

(19)

(11) Veröffentlichungsnummer : **0 049 743**
**B1**

(12) **EUROPÄISCHE PATENTSCHRIFT**

(45) Veröffentlichungstag der Patentschrift :
17.07.85

(21) Anmeldenummer : 81105896.5

(22) Anmeldetag : 25.07.81

(51) Int. Cl.⁴ : **G 01 B   3/00**

(54) Positionsmesseinrichtung.

(30) Priorität : 14.10.80 DE 3038716

(43) Veröffentlichungstag der Anmeldung :
21.04.82 Patentblatt 82/16

(45) Bekanntmachung des Hinweises auf die Patenterteilung : 17.07.85 Patentblatt 85/29

(84) Benannte Vertragsstaaten :
AT CH FR GB IT LI NL SE

(56) Entgegenhaltungen :
DE-A- 1 806 935
DE-A- 2 642 443
DE-A- 2 713 593
DE-C- 2 207 374
DE-U- 7 922 890
US-A- 3 742 609
US-A- 4 117 439
Firmendruckschrift Teledyne Gurley "Pathfinder", Nr.
8780-75-879

(73) Patentinhaber : Dr. Johannes Heidenhain GmbH
Nansenstrasse 17
D-8225 Traunreut (DE)

(72) Erfinder : Reichl, Alfred
Sonntagshornstrasse 10
D-8221 Stein (DE)

Jouve, 18, rue St-Denis, 75001 Paris, France

## Beschreibung

Die Erfindung betrifft eine gekapselte digitale elektrische Positionsmeßeinrichtung nach dem Oberbegriff des Anspruches 1. Eine derartige Positionsmeßeinrichtung ist z. B. aus der DE-C-22 07 374 bekannt.

Digitale elektrische Positionsmeßeinrichtungen umfassen bekanntlich inkrementale und absolute Längen- oder Winkelmeßsysteme. Derartige Meßsysteme besitzen wenigstens eine Teilung mit periodischer Struktur (Gitterteilung). Das Abtastprinzip kann fotoelektronischer, induktiver, magnetischer, kapazitiver Art usw. sein. Zur Vermeidung von Störungen insbesondere durch Verschmutzung der Gitterteilung und/oder Abtastbaueinheit werden solche Meßsysteme bereits staub- und spritzwasserdicht gekapselt.

Bei inkrementalen Auflicht- und Durchlichtmeßsystemen ist es bekannt, die Gitterteilung und deren Abtastbaueinheit in einem Hohlkörper vorzusehen und diesen mittels einer flexiblen Stahlfolie gegen äußere Einflüsse abzudecken. Die Stahlfolie gleitet dabei über eine gegenüber dem Hohlkörper vorspringende, gekrümmte, an der Abtastbaueinheit angebrachte Fläche und wird außerhalb dieses Bereiches mittels seitlich am Hohlkörper angebrachter Magnetleisten dichtend festgehalten (DE-C-22 07 374 und DE-A-26 42 443).

Nach der US-A-3 742 609 und dem DE-U-79 22 890 wird das flexible Abdeckband einer Schiebelehre, das über die Abtastbaueinheit gleitet, nur unter Zugspannung gehalten und so gegen den Träger der abzuschirmenden Maßverkörperung gedrückt.

Bei gekapselten inkrementalen Positionsmeßsystemen ist es ferner bekannt, die Gitterteilung und deren Abtastbaueinheit in einem Hohlkörper vorzusehen und diesen mittels einer darin in einer Nut geführten, umlaufenden flexiblen Stahlfolie abzudecken. Die Enden des umlaufenden Stahlbandes sind dabei an der Abtastbaueinheit befestigt. Beim Verschieben der Abtastbaueinheit läuft das Stahlband über zwei Rollen um, die an den Enden des Hohlkörpers vorgesehen sind (Firmendruckschrift Teledyne Gurley « Pathfinder », Nr. 8780-75-879).

Umlaufende, endlose bandförmige Abdeckungen aus Stahl oder Kunststoff sind auch bereits bei Schiebelehren zum Schutz der Maßverkörperung bekanntgeworden (DE-A-18 06 935).

Bekannte gekapselte Positionsmeßsysteme sind insbesondere wegen der konstruktiven Aneinanderreihung der Baugruppen Teilung/Abtastbaueinheit und Abdeckung aufwendig. Derart gekapselte Meßsysteme sind auch bei engen Platzverhältnissen oftmals schwierig anzubringen.

Der Erfindung liegt die Aufgabe zugrunde, eine konstruktiv einfache und preiswerte gekapselte digitale elektrische Positionsmeßeinrichtung hoher Genauigkeit zu schaffen, die zudem vielseitig einsetzbar ist.

Diese Aufgabe wird bei einer Positionsmeßeinrichtung der eingangs genannten Art erfindungsgemäß durch die im kennzeichnenden Teil des Patentanspruches 1 angegebenen Merkmale gelöst.

Weitere, die Erfindung ausgestaltende Maßnahmen entnimmt man den Unteransprüchen.

Die besonderen Vorteile der Erfindung liegen auf der Hand : Konstruktiv einfache, leicht zu montierende und flache Bauweise durch Einsparung eines gesonderten Teilungsträgers.

Die Zeichnung zeigt schematisch ein Ausführungsbeispiel der Erfindung.

Es zeigt

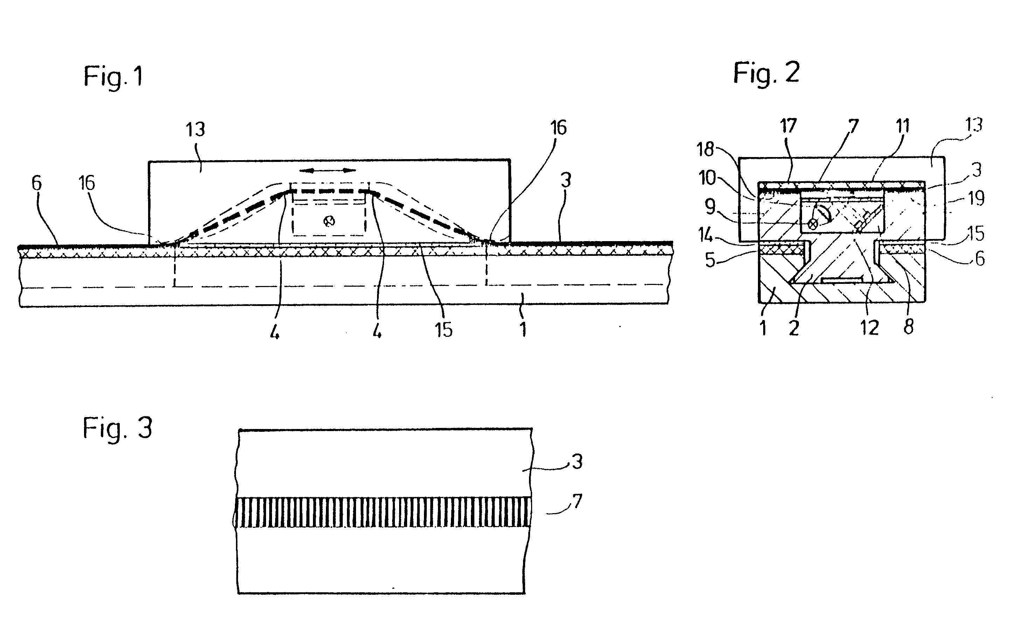

Figur 1 eine Seitenansicht der erfindungsgemäßen Positionsmeßeinrichtung,

Figur 2 einen Schnitt durch die Positionsmeßeinrichtung nach Figur 1,

Figur 3 eine Draufsicht auf einen Ausschnitt des die Teilung tragenden Abdeckbandes.

Die Erfindung wird nachfolgend anhand eines gekapselten Auflicht-Längenmeßsystems erläutert, das sich für die Anwendung der Erfindung bevorzugt anbietet.

In einem etwa U-förmigen biegesteifen Trägerkörper 1 zweckmäßig aus extrudiertem Aluminium ist eine insgesamt mit 2 bezeichnete Abtastbaueinheit geführt. Zur Abdeckung der empfindlichen Teile des Meßsystems ist ein flexibles Stahlband 3 hoher Längenkonstanz vorgesehen, das über eine zumindest abschnittsweise gekrümmte, an der Abtastbaueinheit angebrachte Fläche 4 gleitet. An der dem Stahlband 3 zugewandten Fläche der Abtastbaueinheit 2 sind an beiden Seiten nur geringfügig vorspringende, durchgehende schmale Gleitschienen 18 und 19 vorgesehen. Somit ist auch sichergestellt, daß der Mittenbereich des Stahlbandes 3 völlig berührungsfrei bleibt. Die Materialpaarung der miteinander in Kontakt stehenden Teile 18 bzw. 19 und 3 ist so gewählt, daß der Reibungskoeffizient möglichst gering ist.

Die Stahlfolie 3 wird jeweils außerhalb des von der Abtastbaueinheit 2 abgehobenen Bereiches von Magnetleisten 5 und 6 dichtend festgehalten, die durchgehend entlang des Trägerkörpers 1 angebracht sind. An der der Abtastbaueinheit 2 zugewandten Seite des Stahlbandes 3 ist eine Auflicht-Gitterteilung 7 aufgebracht, die aus abwechselnd lichtreflektierenden und lichtabsorbierenden Flächenbereichen besteht. Das flexible Stahlband 3 erfüllt dabei optimal die an einen derartigen Teilungsträger zu stellenden Forderungen. Die Gitterteilung 7 ist etwa im Mittenbereich des Stahlbandes 3 vorgesehen, so daß der Teilungsbereich völlig frei liegt und keine Beschädigung durch mechanische Einwirkungen erfährt.

In einer Ausnehmung 8 der Abtastbaueinheit 2 sind die Elemente Lampe 9, Kondensor 10, Gitterabtastplatte 11 und Fotoelemente 12 unter-

gebracht. Die Funktionsweise inkrementaler Auf-licht-Meßsysteme ist bekannt und bedarf demnach keiner weiteren Erörterung.

Mit 13 ist ein an der Abtastbaueinheit 2 befestigter Mitnehmer bezeichnet, der auch als Niederhalter für das Stahlband 3 wirkt und zu diesem Zweck an den Endbereichen 16 abgerundet ist.

An der Unterseite der Abtastbaueinheit 2 sind weiche Streifen 14 und 15 aus Gummi, Kunststoff, Filz etc. vorgesehen, so daß auch in diesem Bereich das Meßsystem abgedeckt ist. Es wäre auch denkbar, daß sich die Abtastbaueinheit direkt an den Magnetleisten dichtend abstützt. Ein weicher Streifen 17 an der Unterseite des Mitnehmers 13 bewirkt, daß der Teilungsträger 3 stets parallel zur Gitterabtastplatte 11 ausgerichtet wird.

Als Abdeckfolie kann auch eine Kunststoffolie etc. Verwendung finden, die mit bekannten Mitteln unter Zugspannung gehalten wird und so eine Abdichtung bewirkt. Die Kunststoffolie gleitet dabei wie im vorbeschriebenen Ausführungsbeispiel über die gekrümmte Fläche der Abtastbaueinheit.

Die Erfindung ist ferner bei induktiven, kapazitiven magnetischen sowie auch fotoelektronischen Durchlicht-Meßeinrichtungen usw. realisierbar. Im letztgenannten Fall muß die Teilung an einem transparenten flexiblen Abdeckband hoher Längenkonstanz aufgebracht sein. Die Beleuchtungseinrichtung für die Gitterteilung befindet sich hierbei außerhalb des abzuschirmenden Raumes am Mitnehmer für die Abtastbaueinheit. Es ist auch möglich, das flexible Abdeckband beispielsweise aus drei flexiblen Streifen zusammenzusetzen, von denen die äußeren Streifen Stahlfolien sind, während der mittlere Streifen eine Gitterteilung (Transmissionsgitter) trägt und aus transparentem Material besteht. Bei dieser Ausbildung kann die zusammengesetzte Abdeckfolie wie im dargestellten Ausführungsbeispiel mittels zweier Magnetleisten dichtend festgehalten werden.

Eine weitere Anwendung der Erfindung ist auch bei Positionsmeßsystemen möglich, die ein umlaufendes flexibles Abdeckband aufweisen. Die Gitterteilung ist dabei an der dem abzuschirmenden Raum zugewandten Seite des Abdeckbandes aufgebracht. Die Abtastbaueinheit ist ortsfest in einem Hohlkörper vorgesehen, der Nuten aufweist, in denen das flexible Abdeckband geführt ist und umläuft. An der Außenseite des Abdeckbandes ist ein Mitnehmer befestigt.

**Patentansprüche**

1. Gekapselte digitale elektrische Positionsmeßeinrichtung mit einer Teilung (7), die von einer Abtastbaueinheit (2) abgetastet und ferner über ihre Längserstreckung zusammen mit Teilen der Abtastbaueinheit (2) mittels eines flexiblen Abdeckbandes (3) hoher Längenkonstanz gegen äußere Einflüsse abgeschirmt wird, wobei das Abdeckband (3) an einem die Teilung (7) und die Abtastbaueinheit (2) tragenden Trägerkörper (1) anliegt, dadurch gekennzeichnet, daß das am Trägerkörper (1) anliegende flexible Abdeckband (3) zugleich der Träger für die Teilung (7) ist.

2. Meßeinrichtung nach Anspruch 1, dadurch gekennzeichnet, daß das Abdeckband (3) ein flexibles Stahlband ist, an dessen der Abtastbaueinheit (2) zugewandten Fläche eine Gitterteilung (7) aufgebracht ist.

3. Meßeinrichtung nach Anspruch 2, dadurch gekennzeichnet, daß das die Gitterteilung (7) tragende flexible Stahlband (3) am Trägerkörper (1) unter Magneteinwirkung festgehalten wird.

4. Meßeinrichtung nach einem der Ansprüche 2 und 3, dadurch gekennzeichnet, daß der die Abtastbaueinheit (2) führende Trägerkörper (1) biegesteif ist, und daß ferner das die Gitterteilung (7) tragende Stahlband (3) über eine gegenüber dem Trägerkörper (1) vorspringende, zumindest abschnittsweise gekrümmte und an der Abtastbaueinheit (2) angebrachte gleitet und außerhalb des Bereiches der Abtastbaueinheit (2) mittels seitlich am Trägerkörper (1) vorgesehener, durchgehender Magnetleisten (5, 6) dichtend festgehalten wird.

5. Meßeinrichtung nach Anspruch 4, dadurch gekennzeichnet, daß die Teilung (7) etwa im Mittenbereich des Stahlbandes (3) aufgebracht ist und daß das Stahlband (3) nur außerhalb des Teilungsbereiches mit den Magnetleisten (5, 6) sowie mit den gekrümmten Flächenbereichen (4) von an der Abtastbaueinheit (2) angebrachten Gleitschienen (18, 19) in Kontakt steht.

6. Meßeinrichtung nach Anspruch 1, dadurch gekennzeichnet, daß die Teilung an einem transparenten flexiblen Abdeckband angebracht ist.

7. Meßeinrichtung nach Anspruch 6, dadurch gekennzeichnet, daß das flexible Abdeckband aus drei nebeneinanderliegenden, zusammenhängenden Streifen besteht, von denen die äußeren Streifen flexible Stahlbänder sind, die von Magneten am Trägerkörper für das Abdeckband dichtend gehalten sind, während der mittlere Streifen ein transparentes flexibles Band ist, das auf der der Abtastbaueinheit zugewandten Fläche eine Gitterteilung trägt.

8. Meßeinrichtung nach Anspruch 7, dadurch gekennzeichnet, daß eine Beleuchtungseinheit für die Gitterteilung außerhalb des abzuschirmenden Raumes am Mitnehmer für die Abtastbaueinheit vorgesehen ist.

9. Meßeinrichtung nach Anspruch 1 oder 6, dadurch gekennzeichnet, daß das Abdeckband ein flexibles Kunststoffband ist, das unter Zugspannung gehalten ist und an dessen dem abzuschirmenden Raum zugewandter Fläche eine Gitterteilung angebracht ist.

10. Meßeinrichtung nach Anspruch 1, dadurch gekennzeichnet, daß ein endloses flexibles Abdeckband am Trägerkörper umläuft und daß am Abdeckband, an der dem abzuschirmenden Raum zugewandten Fläche, eine Gitterteilung angebracht ist.

11. Meßeinrichtung nach Anspruch 10, dadurch gekennzeichnet, daß der Trägerkörper ein Hohlkörper ist, in welchem die Abtastbaueinheit ortsfest eingebaut ist und der Führungsnuten für das umlaufende Abdeckband aufweist, das von einem außen daran befestigten Mitnehmer relativ zur Abtastbaueinheit verschiebbar ist.

**Claims**

1. Encapsulated digital electric position measuring device having a graduation (7), which is scanned by a scanning module (2) and, furthermore, is shielded against external influences along its length together with parts of the scanning module (2) by means of a flexible cover band (3) of high linear constancy, the cover band (3) lying against a support element (1) bearing the graduation (7) and the scanning module (2), characterised in that the flexible cover band (5) lying against the support element (1) is at the same time the support for the graduation (7).

2. Measuring device according to Claim 1, characterised in that the cover band (3) is a flexible steel band, to whose surface facing the scanning module (2) a grid graduation (7) is applied.

3. Measuring device according to Claim 2, characterised in that the flexible steel band (3) bearing the grid graduation (7) is held secure on the support element (1) by magnetic effect.

4. Measuring device according to one of Claims 2 and 3, characterised in that the support element (1) guiding the scanning module (2) is flexurally stiff, and in that furthermore the steel band (3) bearing the grid graduation (7) slides over a surface (4) projecting with respect to the support element (1), curved at least sectionally and attached to the scanning module (2), and is held flush and secure beyond the area of the scanning module (2) by means of continuous magnetic strips (5, 6) provided laterally on the support element (1).

5. Measuring device according to Claim 4, characterised in that the graduation (7) is applied approximately in the centre region of the steel band (3) and in that the steel band (3) is in contact with the magnetic strips (5, 6) and with the curved surface areas (4) of slide rails (18, 19) attached to the scanning module (2) only beyond the graduation area.

6. Measuring device according to Claim 1, characterised in that the graduation is applied to a transparent, flexible cover band.

7. Measuring device according to Claim 6, characterised in that the flexible cover band consists of three adjacent, connected strips, of which the outer strips are flexible steel bands, which are held flush for the cover band by magnets on the support element, whereas the central strip is a transparent, flexible band which bears a grid graduation on the surface facing the scanning module.

8. Measuring device according to Claim 7, characterised in that a lighting unit for the grid graduation is provided on the driver for the scanning module, outside the space to be shielded.

9. Measuring device according to Claim 1 or 6, characterised in that the cover band is a flexible plastic band, which is held under tensile stress and to whose surface facing the space to be shielded a grid graduation is applied.

10. Measuring device according to Claim 1, characterised in that a continuous, flexible cover band runs round the support element, and in that a grid graduation is applied to the cover band, on the surface facing the space to be shielded.

11. Measuring device according to Claim 10, characterised in that the support element is a hollow body, in which the scanning module is stored in fixed position and which has guide grooves for the cover band running round, which is displaceable relative to the scanning module by means of a driver secured to it on the outside.

**Revendications**

1. Dispositif de mesure de position électrique numérique blindé avec une graduation (7) qui est balayée par une unité de balayage (2) et qui est en outre, conjointement avec des parties de l'unité de balayage (2), protégée sur toute sa longueur contre les influences extérieures au moyen d'un ruban de recouvrement souple (3) de grande constance de longueur, le ruban de recouvrement (3) s'appuyant sur l'élément de support (1) portant la graduation (7) et l'unité modulaire de balayage (2), caractérisé en ce que le ruban de recouvrement souple (3) s'appuyant sur l'élément de support (1) est en même temps le support de la graduation (7).

2. Dispositif de mesure selon la revendication 1, caractérisé en ce que le ruban de recouvrement (3) est un ruban d'acier souple sur la face tournée vers l'unité de balayage (2) duquel est apposée une graduation (7).

3. Dispositif selon la revendication 2, caractérisé en ce que le ruban d'acier souple (3) portant la graduation (7) est fixé sur l'élément de support (1) par voie magnétique.

4. Dispositif de mesure selon la revendication 2 ou 3, caractérisé en ce que l'élément de support (1) guidant l'unité de balayage (2) est rigide à la flexion, et qu'en outre le ruban d'acier (3) portant la graduation (7) coulisse sur une surface (4) en saillie par rapport à l'élément de support (1), au moins partiellement cambrée et disposée sur l'unité de balayage (2), et est fixé hermétiquement au-delà de la zone de l'unité de balayage (2) au moyen de baguettes aimantées (5, 6) continues prévues latéralement sur l'élément de support (1).

5. Dispositif de mesure selon la revendication 4, caractérisé en ce que la graduation (7) est apposée dans la zone approximativement médiane du ruban d'acier (3), et que le ruban d'acier (3) n'est en contact qu'en dehors de la zone de graduation avec les baguettes aimantées (5, 6), ainsi qu'avec les zones de surface cambrées (4) de glissières (18, 19) disposées sur l'unité de balayage (2).

6. Dispositif de mesure selon la revendication 1, caractérisé en ce que la graduation est apposée sur un ruban de recouvrement souple transparent.

7. Dispositif de mesure selon la revendication 6, caractérisé en ce que le ruban de recouvrement souple est constitué de trois bandes juxtaposées, les bandes externes étant des rubans d'acier souples fixés hermétiquement par des aimants sur l'élément de support du ruban de recouvrement, tandis que la bande médiane est un ruban souple transparent qui porte une graduation sur la face tournée vers l'unité de balayage.

8. Dispositif de mesure selon la revendication 7, caractérisé en ce qu'une unité d'éclairage de la graduation est prévue sur l'entraîneur de l'unité de balayage, en dehors de l'espace à protéger.

9. Dispositif de mesure selon la revendication 1 ou 6, caractérisé en ce que le ruban de recouvrement est un ruban en matière plastique souple, qui est maintenu sous tension et sur la face tournée vers l'espace à protéger duquel est apposée une graduation.

10. Dispositif de mesure selon la revendication 1, caractérisé en ce qu'un ruban de recouvrement souple sans fin circule autour de l'élément de support, et qu'une graduation est apposée sur le ruban de recouvrement, sur sa face tournée vers l'espace à protéger.

11. Dispositif de mesure selon la revendication 10, caractérisé en ce que l'élément de support est un corps creux dans lequel l'unité de balayage est installée de façon fixe et qui présente des rainures de guidage pour le ruban de recouvrement déplaçable par rapport à l'unité de balayage par un entraîneur fixé extérieurement sur le ruban.

Fig. 1

Fig. 2

Fig. 3